# EUROPEAN PATENT APPLICATION

(11) **EP 4 781 946 A1**
(43) Date of publication of application: **29.07.2026**
(21) Application number: 24867167.9
(22) Date of filing: 13.08.2024
(51) Int. Cl.: A61C 17/22

(54) **TOOTHBRUSH HEAD FOR ELECTRIC TOOTHBRUSH, AND MANUFACTURING METHOD THEREFOR**

(30) Priority: 20.09.2023 CN 202311220041
(71) Applicant: Dai, Xiaoguo, Shanghai 201506 (CN); Shanghai Shift Electrics Co., Ltd., Shanghai 201506 (CN)
(72) Inventor: DAI, Xiaoguo, Shanghai 201506 (CN)
(74) Representative: WSL Patentanwälte Partnerschaft mbB
(86) International application number: PCT/CN2024/111637
(87) International publication number: WO 2025/060750

(57) **Abstract**

A toothbrush head for an electric toothbrush, and a manufacturing method therefor. The toothbrush head comprises: a brush disc (2); and a brush-head housing (1), wherein an accommodating portion (11) is formed at one end of the brush-head housing (1); the accommodating portion (11) accommodates a rotating portion (22) of the brush disc (2); a first surface (25) of the brush disc (2) rotates about an axis of rotation relative to a second surface (15) of the accommodating portion (11); one of the first surface (25) of the brush disc (2) and the second surface (15) of the accommodating portion (11) has a first surface shape formed by means of injection molding using a mold, and the other of the first surface (25) of the brush disc (2) and the second surface (15) of the accommodating portion (11) has a molded second surface shape that corresponds to the first surface shape; at least one of the first surface (25) and the second surface (15) is formed from a thermoplastic crystalline polymer; and the first surface shape and the second surface shape are formed to prevent the brush disc (2) from being separated from the accommodating portion (11) in the direction of the axis of rotation. The toothbrush head omits the step of assembling the brush disc (2) and the brush-head housing (1), thereby improving production efficiency, reducing costs, and eliminating potential safety risks caused by assembly errors.

## Description

### Technical Field

The present disclosure relates to the technical field of oral care apparatuses, and in particular, to a toothbrush head for an electric toothbrush.

### Background Art

Electric toothbrushes have been widely used at present. A common electric toothbrush has a brush head capable of rotating back and forth. The brush head includes a brush handle shell and a brush disc. Cleaning elements are mounted on the brush disc. An oscillating rod is disposed inside the brush handle shell. The oscillating rod drives the brush disc to rotate back and forth in an accommodating portion at one end of the brush handle shell, thereby achieving a cleaning action of the brush head.

In order to achieve rotational movement of the brush disc relative to the brush handle shell while ensuring that the brush disc does not disengage from the brush handle shell in use, CN 104825243 B discloses a brush head, in which a brush disc is mounted into an accommodating portion of a brush handle shell via a brush disc drive shaft, and a brush head drive shaft passes through a hollow area of the brush disc and is attached to a hole in the brush handle shell. This ensures a reliable rotational connection of the brush disc relative to the brush handle shell.

However, with respect to the existing toothbrush head, the process of manufacturing and assembling a connection structure for attaching the brush disc to the accommodating portion of the brush handle shell is relatively complex. When the brush head drive shaft is made of metal, the production cost of the toothbrush head is relatively high. On the other hand, as the brush disc needs to be mounted in the accommodating portion in the next step, assembly errors may result in a safety hazard that the brush disc disengages.

Therefore, the existing reciprocating brush head still has shortcomings. There is a need to further simplify the production process of toothbrush heads, while aiming to further reduce production costs and improve product reliability.

### Summary

In order to overcome the deficiencies in the prior art, the present invention provides a toothbrush head for an electric toothbrush, comprising: a brush disc, the brush disc comprising a rotating portion; and a brush head shell, an accommodating portion being formed at one end of the brush head shell, the accommodating portion receiving the rotating portion of the brush disc, a first surface of the brush disc rotating about an axis of rotation relative to a second surface of the accommodating portion, wherein one of the first surface of the brush disc and the second surface of the accommodating portion has a first surface shape formed by injection molding with a mold, the other one of the first surface of the brush disc and the second surface of the accommodating portion has a second surface shape molded in correspondence with the first surface shape; at least one of the first surface and the second surface is formed from a thermoplastic crystalline polymer, and the first surface shape and the second surface shape are formed to prevent the brush disc from disengaging from the accommodating portion of the brush head shell along the direction of the axis of rotation.

According to one aspect of the present invention, the brush disc is integrally formed from the thermoplastic crystalline polymer, and the thermoplastic crystalline polymer has a molding shrinkage greater than 0.5%.

According to another aspect of the present invention, the brush disc further comprises a cleaning element carrier portion, with the rotating portion disposed on one side of the carrier portion; the first surface and the second surface comprise at least one segment of conical surface tapering toward the cleaning element carrier portion, and the conical surface has an inclination angle greater than 0.3 degrees relative to the axis of rotation.

According to another aspect of the present invention, in the direction of the axis of rotation, the first surface of the brush disc comprises: a first conical surface portion that tapers in a direction away from a side of the brush disc to which cleaning elements are attached; a second conical surface portion that tapers in a direction toward the side of the brush disc to which the cleaning elements are attached; the second surface of the brush head shell comprises: a third conical surface portion that tapers in the direction away from the side of the brush disc to which the cleaning elements are attached and that matches the first conical surface portion; a fourth conical surface portion that tapers in the direction toward the side of the brush disc to which the cleaning elements are attached and that matches the second conical surface portion.

According to another aspect of the present invention, the brush disc integrally comprises a cleaning element carrier portion, with the rotating portion protruding from one side of the carrier portion; the first surface of the brush disc further comprises: a circular end face of the carrier portion, the circular end face being transverse to the axis of rotation; and the second surface of the brush head shell further comprises: an end face of the accommodating portion.

According to another aspect of the present invention, the toothbrush head further comprises an oscillating rod that rotates back and forth within the brush head shell, wherein a follower recess for receiving a drive end of the oscillating rod is formed in the rotating portion, and the follower recess is at least partially disposed at the second conical surface portion of the rotating portion.

According to another aspect of the present invention, the accommodating portion further comprises a peripheral wall and a bushing inside the peripheral wall, the bushing forms the second surface of the accommodating portion, and the bushing and the peripheral wall are injection-molded and accordingly are kept from disengaging along the direction of the axis of rotation.

According to another aspect of the present invention, the bushing is formed from a thermoplastic crystalline polymer.

According to another aspect of the present invention, the accommodating portion has a peripheral wall around the axis of rotation, either side of the peripheral wall has an opening, and the rotating portion of the brush disc extends from the opening on one side of the peripheral wall to the opening on the other side of the peripheral wall.

According to another aspect of the present invention, the thermoplastic crystalline polymer is polyoxymethylene.

Furthermore, the present invention also provides a method for manufacturing a toothbrush head, wherein the toothbrush head comprises a brush disc, the brush disc comprises a cleaning element carrier portion and a rotating portion protruding on one side of the carrier portion; and a brush head shell, an accommodating portion is formed at one end of the brush head shell, the accommodating portion receives the rotating portion of the brush disc, and a first surface of the rotating portion rotates about an axis of rotation relative to a second surface of the accommodating portion, wherein at least one of the first surface and the second surface is formed from a thermoplastic crystalline polymer; the method of the present invention comprises: a first injection molding step, wherein one of the brush disc and the accommodating portion of the brush head shell is formed by injection molding, and the first surface of the brush disc or the second surface of the accommodating portion of the brush head shell is correspondingly formed into a first surface shape by means of a first mold a second injection molding step, wherein the formed one of the brush disc and the accommodating portion of the brush head shell is placed into a second mold, and injection molding is performed to form the other one of the brush disc and the accommodating portion of the brush head shell, the other of the first surface of the brush disc and the second surface of the accommodating portion of the brush head shell is molded and formed into a second surface shape corresponding to the first surface shape, herein the first surface shape and the second surface shape are formed to prevent the brush disc from disengaging from the accommodating portion along the direction of the axis of rotation.

Preferably, after the injection molding steps are completed, the brush disc is rotated relative to the accommodating portion of the brush head shell such that the first surface and the second surface are separated from each other.

Preferably, the brush head housing is integrally formed by injection molding in the first injection molding step; the brush disc is integrally formed from a thermoplastic crystalline polymer by injection molding in the second injection molding step.

According to another aspect of the present invention, the accommodating portion further comprises a peripheral wall and a bushing inside the peripheral wall, the bushing at least partially forms the second surface of the accommodating portion, and the bushing and the peripheral wall are injection-molded and accordingly are kept from disengaging along the direction of the axis of rotation; before the first injection molding step, the bushing is formed by pre-injection molding and placed into the first mold.

According to another aspect of the present invention, in a pre-injection molding step, the bushing is injection-molded from a thermoplastic crystalline polymer.

The present disclosure achieves a low-cost toothbrush head and reduces wear between moving parts of the toothbrush head. According to the toothbrush head of the present disclosure, steps of assembling the brush disc and the brush head shell are omitted, which not only improves production efficiency but also eliminates safety hazards caused by assembly errors.

### Brief Description of the Drawings

For a more complete understanding of the present disclosure, the following description of exemplary embodiments can be considered with reference to the drawings, in which:
FIG. 1 shows a perspective view of a toothbrush head for an electric toothbrush according to a first embodiment of the present disclosure.
FIG. 2 shows a perspective cross-sectional view of the toothbrush head for the electric toothbrush according to the first embodiment of the present disclosure.
FIG. 3 shows another perspective cross-sectional view of the toothbrush head for the electric toothbrush according to the first embodiment of the present disclosure, with a brush head shell removed.
FIG. 4 shows a perspective view of a brush disc of the toothbrush head according to the first embodiment of the present disclosure.
FIG. 5 shows an exploded perspective view of the brush disc and the brush head shell of the toothbrush head according to the first embodiment of the present disclosure.
FIG. 6 shows a perspective view of the brush disc and the brush head shell of the toothbrush head according to the first embodiment of the present disclosure when they have not been separated after injection molding.
FIG. 7 shows a cross-sectional view of a toothbrush head for an electric toothbrush according to a second embodiment of the present disclosure.
FIG. 8 shows a cross-sectional view of a toothbrush head for an electric toothbrush according to a third embodiment of the present disclosure.

List of reference signs:
1, 1' brush head shell,
11, 11' accommodating portion
15, 15" second surface
151 end face of accommodating portion
152 third conical surface portion
153 fourth conical surface portion
2, 2' brush disc
21 carrier portion
22 rotating portion
25, 25" first surface
251 circular end face
252 first conical surface portion
253 second conical surface portion
26 follower recess
3 stop sleeve.
4 oscillating rod
41 drive end
5 bushing
6 cleaning element
L1 axis of rotation
L2 axis of oscillation
α angle
β angle
F1 external force
F2 support force
F3 support force
F4 support force

### Detailed Description of Embodiments

The disclosure will be further described below in conjunction with specific embodiments and the accompanying drawings. In the following description, more details are set forth to facilitate a thorough understanding of the disclosure. However, it is obvious that the disclosure can be implemented in various other ways different from those described herein. Those skilled in the art can make similar generalizations and deductions according to practical application situations without departing from the connotation of the disclosure. Therefore, the content of this specific embodiment should not be construed as limiting the protection scope of the disclosure.

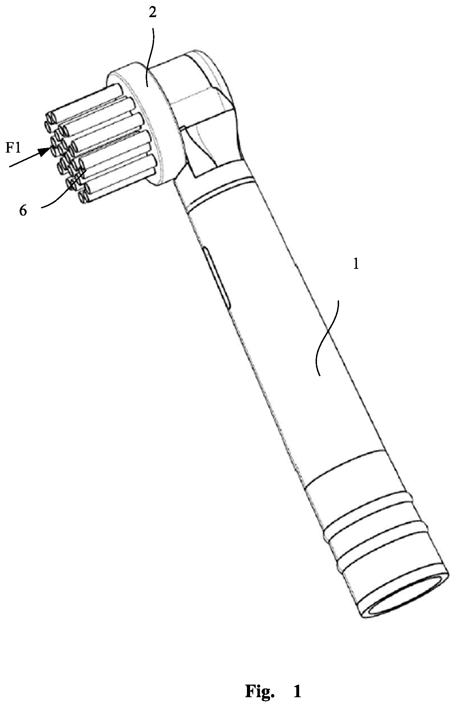

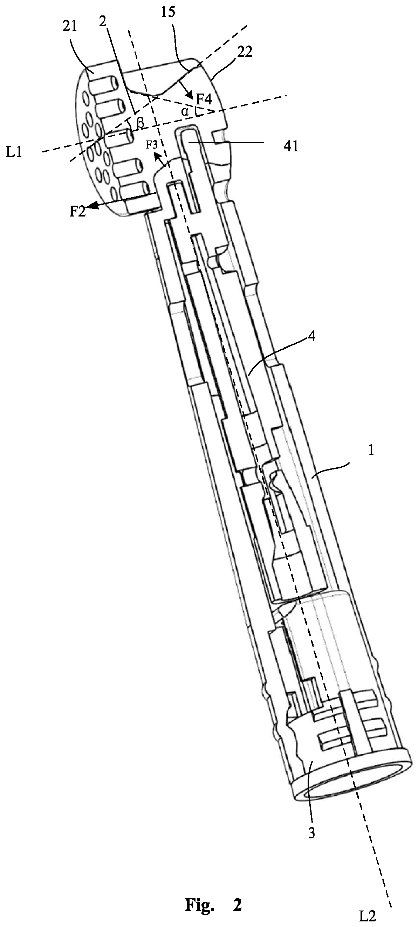

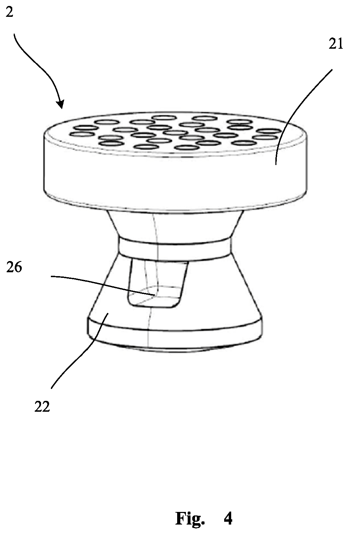

FIG. 1 to FIG. 6 show a toothbrush head for an electric toothbrush according to a first embodiment of the present disclosure. The toothbrush head mainly includes a brush head shell 1, a brush disc 2 disposed in an accommodating portion 11 at one end of the brush head shell 1, and an oscillating rod 4 disposed in a cavity of the brush head shell 1. As shown in FIG. 2, the interior of the oscillating rod 4 is adapted for the insertion of a drive shaft of the electric toothbrush. As back-and-forth rotation of the drive shaft, the oscillating rod 4 can oscillate back and forth about its axis of oscillation L2 within the cavity of the brush head shell 1, thereby driving the brush disc 2 to rotate back and forth about its axis of rotation L1 within a predetermined rotation angle range.

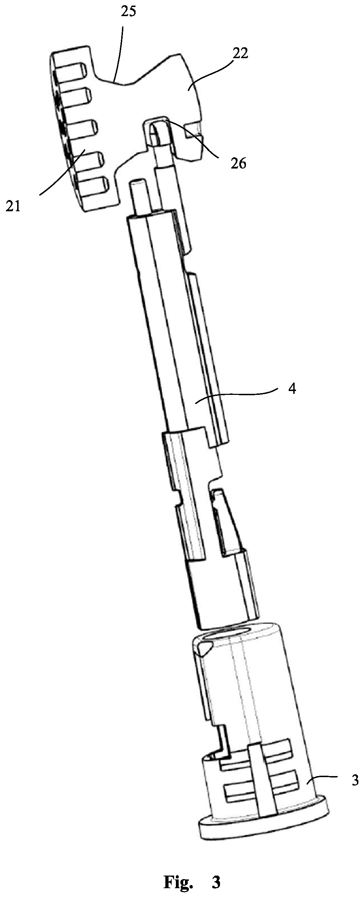

As shown in FIGS. 2 and 3, the brush disc 2 mainly includes a cleaning element carrier portion 21 and a rotating portion 22 disposed on one side of the carrier portion 21. In a preferred embodiment, the carrier portion 21 and the rotating portion 22 are integrally formed, and the rotating portion 22 protrudes from one side surface of the carrier portion. The cleaning element carrier portion 21 of the brush disc 2 is substantially located outside the accommodating portion 11. Cleaning elements 6 such as bristles are mounted on the carrier portion 21. The rotating portion 22 is substantially located within the accommodating portion 11, a follower recess 26 is formed in the rotating portion 22, and a drive end 41 of the oscillating rod 4 is inserted into the follower recess 26, so that the brush disc 2 can rotate back and forth about its axis of rotation L1 as the oscillating rod 4 oscillates, to drive the cleaning elements 6 on the carrier portion 21 of the brush disc 2 to rotate back and forth, thereby achieving the action of cleaning teeth. The follower recess 26 may preferably be formed as a recess having a rectangular cross-section.

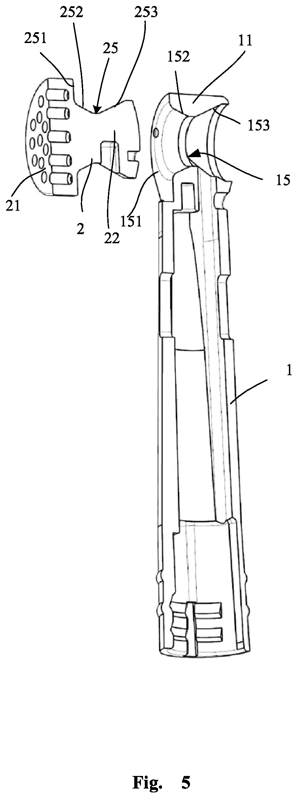

In addition, as shown in FIG. 5, the accommodating portion 11 is formed at one end of the brush head shell 1. The accommodating portion 11 includes a peripheral wall. Both sides of the peripheral wall are open, forming an opening on either side of the peripheral wall. At the other end of the brush head shell 1, a stop sleeve 3 is inserted along the direction of the axis of oscillation L2. The stop sleeve 3 is configured to stop the oscillating rod 4 within the cavity of the brush head shell 1, thereby preventing the oscillating rod 4 from disengaging from the brush head shell 1.

In the toothbrush head for the electric toothbrush, the brush disc 2 and the accommodating portion 11 of the brush head shell 1 are two components capable of rotating relative to each other. As shown in FIG. 5, the brush disc 2 has a first surface 25, and the accommodating portion 11 has a second surface 15 matching the first surface. The first surface 25 rotates about the axis of rotation L1 relative to the second surface 15, while the brush disc 2 and the accommodating portion 11 need to be locked in the direction of the axis of rotation L1 and cannot be disengaged. According to the present disclosure, one of the first surface 25 of the brush disc 2 and the second surface 15 of the accommodating portion 11 is molded correspondingly using the other one, and the two surfaces have surface shapes that lock the movement along the axis of rotation L1, ensuring that the brush disc 2 rotates within the accommodating portion 11, without disengaging along the direction of the axis of rotation L1.

In the first embodiment, the brush head shell 1 having the accommodating portion 11 is integrally formed in one mold by injection molding, and after the injection molding is completed, the second surface 15 of the accommodating portion 11 has a surface shape formed by injection molding with the mold. That is, the second surface 15 is shaped by a part of the mold during injection molding. After the brush head shell 1 is cooled, the brush head shell 1 is combined with a mold to be subjected to an injection molding step again to form the brush disc 2, where the rotating portion 22 of the brush disc 2 is formed by injecting a polymer material into the accommodating portion 11. In this way, a part of the surface of the brush disc 2 (the first surface 25) is molded in correspondence with the surface shape of the second surface 15. That is, the first surface 25 is directly shaped by the second surface 15 in the injection molding step. It can be understood that the first surface 15 and the second surface 25 have surface shapes molded to match each other.

Specifically, at least one of the brush disc 2 and the brush head shell 1 is made of a thermoplastic crystalline polymer. Preferably, the brush disc 2 is made of the thermoplastic crystalline polymer. For example, polymers with a crystallinity greater than 65%, such as polyoxymethylene (POM), can be used, and their crystallinity is typically within the range of 65% to 85%. Because the thermoplastic crystalline polymer has simple molecules containing few functional groups, the thermoplastic crystalline polymer has weak affinity with other polymer materials (including non-crystalline materials and crystalline materials of the same type). No significant adhesion occurs between the second surface 15 of the accommodating portion 11 of the brush head shell and the first surface 25 of the brush disc 2 that are respectively formed in two injection molding steps. Thus, the brush disc 2 and the brush head shell 1 that are in axial locking fit and capable of rotating relative to each other can be obtained merely by the injection molding steps, eliminating the need for a further assembly step.

On the other hand, since the thermoplastic crystalline polymer generally has a high molding shrinkage (the molding shrinkage refers to the percentage of a difference between the size of a plastic part at molding temperature and the size of the plastic part after it is removed from a mold to be cooled to room temperature), it is easy to form a kinematic clearance between the first surface 25 and the second surface 15 after the brush disc 2 formed from the thermoplastic crystalline polymer is cooled and shrinks. The thermoplastic crystalline polymer suitable for use in the present disclosure preferably has a molding shrinkage greater than 0.05%, more preferably greater than 0.5%. For example, the molding shrinkage of polyoxymethylene is about 1.7%. With the high shrinkage, the polyoxymethylene shrinks significantly after being cooled, so that a clearance is formed between the first surface 25 of the brush disc 2 and the second surface 15 of the accommodating portion 11. This is more conducive to forming two components capable of moving relative to each other within the toothbrush head.

In an alternative embodiment, the brush disc 2 may first be formed by injection molding using a crystalline polymer such as polyoxymethylene; after the brush disc 2 is cooled and shaped, the brush disc 2 is placed into a mold for the accommodating portion 11; and subsequently, a crystalline polymer of the same type or another polymer (e.g., a semi-crystalline or non-crystalline polymer) is injected, to envelop the rotating portion 22 of the brush disc 2 to form the accommodating portion 11, thereby forming opposite surfaces capable of moving relative to each other.

In other alternative embodiments, the brush head shell 1, or at least the accommodating portion 11 of the brush head shell 1, may be formed from the thermoplastic crystalline polymer, and the brush disc 2 is formed from a non-crystalline polymer by injection molding.

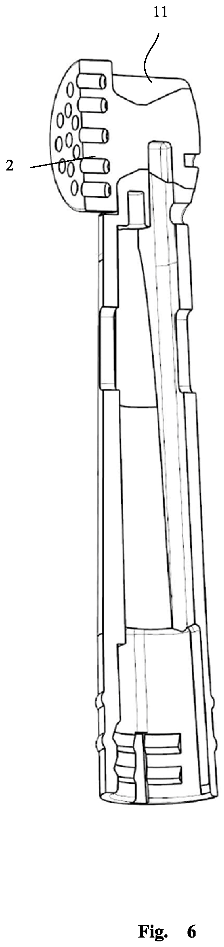

It should be understood that when at least one of the opposite surfaces 15, 25 is formed from the crystalline polymer by injection molding, adhesion may occur between the first surface 25 of the brush disc 2 and the second surface 15 of the accommodating portion 11 after the injection molding is completed, due to the effect of the material or injection molding temperature. As shown in FIG. 6, the two surfaces are adjacent to each other, but adhered portions can be easily separated by applying a force that drives the brush disc 2 to rotate relative to the accommodating portion 11.

In the present disclosure, the surface shapes of the first surface 25 and the second surface 15 are specially designed to prevent the brush disc 2 from disengaging from the accommodating portion 11 of the brush head shell 1 along the direction of the axis of rotation L1 (including a direction toward the cleaning elements and a direction away from the cleaning elements). To this end, preferably, the surface shapes of the first surface 25 and the second surface 15 are designed to include at least one segment that forms a conical surface tapering toward the cleaning element carrier portion. Considering the shrinkage of a crystalline polymeric material, the conical surface has an inclination angle greater than 0.3 degrees relative to the axis of rotation. For manufacturing and reliability reasons, the inclination angle is preferably in the range of 5 to 30 degrees.

As shown in FIG. 5, the surface shapes of the first surface 15 and the second surface 25 in the first embodiment include two segments of the conical surface inclined in different directions. Specifically, in the direction of the axis of rotation L1, the first surface 25 of the brush disc 2 includes: a circular end face 251 of the carrier portion 21, the circular end face 251 of the carrier portion 21 being transverse to the axis of rotation; a first conical surface portion 252, the first conical surface portion 252 tapering in a direction away from the carrier portion 21 of the brush disc 2; and a second conical surface portion 253, the second conical surface portion 253 tapering in a direction toward the carrier portion 21 of the brush disc 2. The rotating portion 22 of the brush disc 2 has a smaller diameter in the middle and a larger diameter at both ends. Correspondingly, the second surface 15 of the brush head shell 1 includes: an end face 151 on one side of the accommodating portion 11, the end face 151 abutting on the circular end face 251 of the carrier portion 21 when the brush disc 2 mates with the brush head shell 1; a third conical surface portion 152, the third conical surface portion 152 tapering in the direction away from the carrier portion of the brush disc and being opposite the first conical surface portion 252; and a fourth conical surface portion 153, the fourth conical surface portion 153 tapering in the direction toward the carrier portion 21 of the brush disc 2 and being opposite the second conical surface portion 253. The second conical surface portion 253 and the fourth conical surface portion 153 are further away from the cleaning elements 6 than the first conical surface portion 252 and the third conical surface portion 152, so that the peripheral wall of the accommodating portion 11 forms a cross-sectional shape that is thicker in the middle and thinner at both ends. In addition, a curved transition portion may be provided between the first conical surface portion 252 and the second conical surface portion 253, as well as between the third conical surface portion 152 and the fourth conical surface portion 153, to reduce stress concentration. Preferably, the first conical surface portion 252 and the second conical surface portion 253 have substantially equal lengths in the direction of the axis of rotational L1.

The surface portions described above cooperate with each other to achieve the locking of the brush disc 2 and the brush head shell 1 in the direction of the axis of rotation L1. On the one hand, the cooperation between the second conical surface portion 253 and the fourth conical surface portion 153 will generate a support force F4, and the support force F4 prevents the brush disc 2 from disengaging from the accommodating portion 11 of the brush head shell 1 toward the cleaning elements 6 along the axis of rotation L1. On the other hand, when the brush disc 2 is subjected to an external force F1 (see FIG. 1) in a direction away from the cleaning elements 6, the cooperation between the first conical surface portion 252 and the third conical surface portion 152, as well as between the circular end face 251 of the carrier portion 22 and the end face 151 on one side of the accommodating portion 11, prevents the brush disc 2 from moving away from the cleaning elements 6 along the axis of rotation L1. Therefore, the relative position between the brush disc 2 and the accommodating portion 11 in the direction of the axis of rotation L1 is substantially locked, ensuring safety of the toothbrush head during operation. The brush disc 2 will not disengage from the accommodating portion, preventing accidental disengagement that could cause injury to the human body.

The arrangement of the two segments of conical surface in the first embodiment is conducive to reducing the wear on mating end faces of the brush disc and the accommodating portion. Specifically, with reference to FIGS. 1, 2 and 5, when the external force F1 is applied to the cleaning elements 6, the cooperation between the circular end face of the carrier portion 22 and the end face of the accommodating portion 11 provides a support force F2 along the axis of rotation L1, while the first conical surface portion 252 and the third conical surface portion 152 opposite each other generate a support force F3. With F1 remaining constant, a component of the support force F3 along the axis of rotation L1 reduces the acting force F2 on the end faces 151, 251, thereby diminishing a friction force generated between the two end faces 151, 251, slowing down the wear between the end faces 151, 251, and prolonging service life of the toothbrush head.

In a cross-section taken radially through the axis of rotation L1, the respective conical surface portions may be either straight or curved. Preferably, as shown in FIG. 2, the conical surface (i.e., the first conical surface portion 252 and the third conical surface portion 152) tapering toward the side of the cleaning elements 6 preferably has an angle α greater than 3 degrees and less than or equal to 90 degrees, relative to the axis of rotation L1. The conical surface (i.e., the second conical surface portion 253 and the fourth conical surface portion 153) tapering away from the side of the cleaning elements 6 has an angle β greater than 0.3 degrees, and preferably, the angle β is in the range of 5 to 30 degrees.

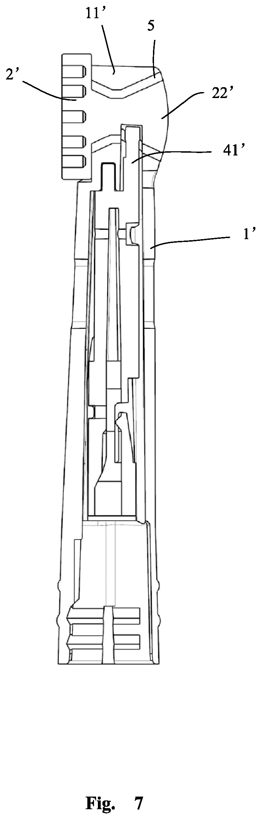

FIG. 7 shows a toothbrush head for an electric toothbrush according to a second embodiment of the present disclosure. The second embodiment differs from the first embodiment in that a bushing 5 is additionally provided on a peripheral wall of an accommodating portion 11' of a brush head shell 1' of the toothbrush head in the second embodiment; an inner surface of the bushing 5 is rotatably adjacent to an outer surface of a rotating portion 22 of a brush disc 2'; and in this way, the surface of the bushing 5 forms a part of a mating surface of the brush head shell 1' that is capable of rotating relative to the brush disc 2', that is, the surface of the bushing 5 corresponds to the second surface 15 of the accommodating portion 11 in the first embodiment.

During production of the toothbrush head according to the second embodiment, the bushing 5 is preferably formed from a thermoplastic crystalline polymer such as polyoxymethylene in a pre-injection molding step. The bushing 5 is then placed in a mold for manufacturing the brush disc 2'. The brush disc 2' is formed by injection molding, at which point the brush disc 2' will possess a surface shape molded in correspondence with a part of the surface of the bushing 5. The brush disc may be made of thermoplastics such as PP, POM or ABS with a shrinkage greater than 0.05%, preferably greater than 0.5%, and more preferably greater than 1.0%. Due to properties of the thermoplastic crystalline polymer, the rotating portion 22' of the brush disc 2' will be separated from the bushing 5, forming a movable fit. Finally, the brush head shell 1 is formed by injection molding around the bushing 5, and the brush head shell 1 may be made of a crystalline polymer material or a non-crystalline polymer material.

In the second embodiment, the bushing 5 has a substantially uniform thickness. Surface shapes of the inner and outer surfaces of the bushing 5 are similar to those of the first surface 25 and the second surface 15 in the first embodiment, i.e., both have two segments of conical surface tapering in opposite directions. In addition, the bushing 5 is also provided with a through hole which allows a drive end 41' of an oscillating rod 4 to pass through.

In the second embodiment, although the bushing 5 is configured as a part of the accommodating portion 11', it should be understood that the bushing 5 and the peripheral wall of the accommodating portion 11' may be in a relatively movable state. In this case, the bushing 5 functions similarly as a bearing, enabling smoother rotation of the brush disc 2' within the accommodating portion 11'.

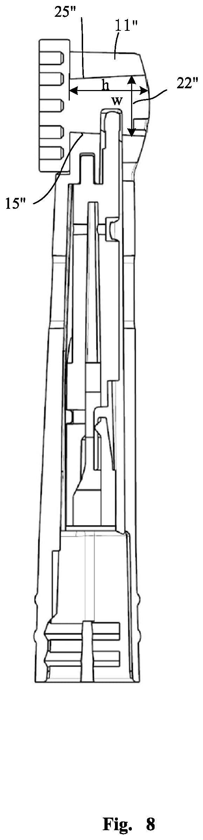

FIG. 8 shows a cross-sectional view of a toothbrush head according to a third embodiment of the present disclosure. The third embodiment differs from the first embodiment in the surface shapes of the mating surfaces of the accommodating portion 11" and the rotating portion 22". As shown in FIG. 8, a first surface 15" and a second surface 25" which rotatably mate with each other only include the conical surface tapering toward the side where the cleaning elements are located. The third embodiment is particularly suitable for cases where the accommodating portion 11" has a relatively large length along its axis of rotation. Due to the relatively large contact area between the contact-mating surfaces, the pressure on the contact-mating surfaces is reduced, and the wear is mitigated.

In an example, the length h of the accommodating portion 11" along the axis of rotation L1 is set to approximately 12 mm; the diameter w of a part of the carrier portion of the rotating portion 22" is 6 mm; the brush disc is formed from polyoxymethylene by injection molding, where the polyoxymethylene has a shrinkage of 1.7%, a clearance generated by the shrinkage of the conical surface of the rotating portion 22" is 6 * 0.017/2 = 0.051 mm; with β set to 0.3 degrees, a radial displacement of the surface of the accommodating portion 11" is 12 mm * sin(0.3) = 0.062 mm; therefore, since β is set to be greater than 0.3 degrees, the accommodating portion 11" can prevent the brush disc from disengaging, thus avoiding injury to the human body.

In other alternative embodiments, the first surface 25 of the brush disc 2 and the second surface 15 of the accommodating portion 11 of the brush head shell 1 are not limited to the configurations in the above embodiments. For example, they may also be formed into surface shapes with flanges and grooves, or with mating steps. These shapes can also prevent the brush disc from disengaging along the axis of rotation L1. To this end, at least a part of the surfaces that come into contact when the brush disc and the accommodating portion rotate relative to each other is configured as a shape that provides a force preventing the brush disc from disengaging from the accommodating portion along the axis of rotation L1.

In other alternative embodiments, the layout and shape of the cleaning elements are not limited to the embodiments shown in the figures, and may vary in diverse ways, for example, the cleaning elements may be in a cross layout. This layout typically requires a separate cleaning element carrier portion to facilitate the implementation of a specific layout of the cleaning elements. To this end, unlike the integrated carrier portion and rotating portion in the aforementioned embodiments, the cleaning elements may be mounted onto a separate carrier portion. After a toothbrush head with a non-removable brush disc is manufactured by the method of the present disclosure, the brush disc may include only the rotating portion, and then the carrier portion mounted with the cleaning elements is fixedly assembled onto the brush disc by ultrasonic welding or threaded fasteners. The present disclosure remains applicable to such a toothbrush head with the separate carrier portion.

The first surface of the brush disc and the second surface of the accommodating portion are molded corresponding surfaces. That is, one of the first surface of the brush disc and the second surface of the accommodating portion is formed by injection molding using the other one as a mold in the injection molding steps, without additional machining. Moreover, after the injection molding is completed, the brush disc and the accommodating portion are integrated together, and position locking of the two in the direction of the axis of rotation is achieved through the conical or stepped surface shapes of the molded corresponding surfaces such that the need for a conventional connecting shaft structure is omitted.

Moreover, according to the toothbrush head of the present disclosure, steps of assembling the brush disc and the brush head shell are omitted, which not only improves production efficiency but also eliminates safety hazards that may be caused by assembly errors.

Although the disclosure is disclosed above with preferred embodiments, they are not intended to limit the disclosure. Any person skilled in the art can make possible variations and modifications without departing from the spirit and scope of the disclosure. Therefore, any modifications, equivalent changes, and modifications made to the above embodiments based on the technical essence of the disclosure, without departing from the content of the technical solution of the disclosure, shall fall within the protection scope defined by the claims of the disclosure.

## Claims

1. A toothbrush head for an electric toothbrush, comprising:
a brush disc comprising a rotating portion; and
a brush head shell, an accommodating portion being formed at one end of the brush head shell and receiving the rotating portion of the brush disc, and a first surface of the brush disc rotating about an axis of rotation relative to a second surface of the accommodating portion;
wherein
one of the first surface of the brush disc and the second surface of the accommodating portion has a first surface shape formed by injection molding with a mold, and
the other one of the first surface of the brush disc and the second surface of the accommodating portion has a second surface shape molded in correspondence with the first surface shape; and
at least one of the first surface and the second surface is formed from a thermoplastic crystalline polymer, and the first surface shape and the second surface shape are formed to prevent the brush disc from disengaging from the accommodating portion of the brush head shell along the direction of the axis of rotation.

2. The toothbrush head of claim 1, wherein the brush disc is integrally formed from the thermoplastic crystalline polymer, and
the thermoplastic crystalline polymer has a molding shrinkage greater than 0.5%.

3. The toothbrush head of claim 1, wherein the brush disc further comprises a cleaning element carrier portion, with the rotating portion disposed on one side of the carrier portion; and
the first surface and the second surface comprise at least one segment of conical surface tapering toward the cleaning element carrier portion, and the conical surface has an inclination angle greater than 0.3 degrees relative to the axis of rotation.

4. The toothbrush head of any one of claims 1 to 3, wherein
in the direction of the axis of rotation, the first surface of the brush disc comprises:
a first conical surface portion that tapers in a direction away from a side of the brush disc to which cleaning elements are attached; and
a second conical surface portion that tapers in a direction toward the side of the brush disc to which the cleaning elements are attached; and
the second surface of the brush head shell comprises:
a third conical surface portion that tapers in the direction away from the side of the brush disc to which the cleaning elements are attached and that matches the first conical surface portion; and
a fourth conical surface portion that tapers in the direction toward the side of the brush disc to which the cleaning elements are attached and that matches the second conical surface portion.

5. The toothbrush head of claim 4, wherein
the brush disc integrally comprises a cleaning element carrier portion, with the rotating portion protruding from one side of the carrier portion;
the first surface of the brush disc further comprises: a circular end face of the carrier portion, the circular end face being transverse to the axis of rotation; and
the second surface of the brush head shell further comprises: an end face of the accommodating portion.

6. The toothbrush head of claim 4, wherein the toothbrush head further comprises an oscillating rod that rotates back and forth within the brush head shell; and
wherein a follower recess for receiving a drive end of the oscillating rod is formed in the rotating portion, and the follower recess is at least partially disposed at the second conical surface portion of the rotating portion.

7. The toothbrush head of claim 1, wherein the accommodating portion further comprises a peripheral wall and a bushing inside the peripheral wall, the bushing forms the second surface of the accommodating portion, and the bushing and the peripheral wall are injection-molded and accordingly are kept from disengaging along the direction of the axis of rotation.

8. The toothbrush head of claim 7, wherein the bushing is formed from the thermoplastic crystalline polymer.

9. The toothbrush head of claim 1, wherein the accommodating portion has a peripheral wall around the axis of rotation, either side of the peripheral wall has an opening, and the rotating portion of the brush disc extends from the opening on one side of the peripheral wall to the opening on the other side of the peripheral wall.

10. The toothbrush head of claim 1, wherein the thermoplastic crystalline polymer is polyoxymethylene.

11. A method for manufacturing a toothbrush head, in which the toothbrush head comprises:
a brush disc comprising a rotating portion; and a brush head shell, an accommodating portion being formed at one end of the brush head shell and receiving the rotating portion of the brush disc, and a first surface of the rotating portion rotating about an axis of rotation relative to a second surface of the accommodating portion, wherein at least one of the first surface and the second surface is formed from a thermoplastic crystalline polymer;
the method comprising:
a first injection molding step, wherein one of the brush disc and the accommodating portion of the brush head shell is formed by injection molding, and the first surface of the brush disc or the second surface of the accommodating portion of the brush head shell is formed into a first surface shape by means of a first mold; and
a second injection molding step, wherein one of the brush disc and the accommodating portion of the brush head shell that is formed is placed into a second mold to form the other one of the brush disc and the accommodating portion of the brush head shell by injection molding, the other of the first surface of the brush disc and the second surface of the accommodating portion of the brush head shell is formed into a second surface shape by molding, corresponding to the first surface shape, and the first surface shape and the second surface shape are formed to prevent the brush disc from disengaging from the accommodating portion along the direction of the axis of rotation.

12. The method of claim 11, wherein
after the injection molding steps are completed, the brush disc is rotated relative to the accommodating portion of the brush head shell such that the first surface and the second surface are separated from each other.

13. The method of claim 11, wherein
the brush head shell is integrally formed by injection molding in the first injection molding step; and
the brush disc is integrally formed from a thermoplastic crystalline polymer by injection molding in the second injection molding step.

14. The method of claim 11, wherein the accommodating portion further comprises a peripheral wall and a bushing inside the peripheral wall, the bushing forms the second surface of the accommodating portion, and the bushing and the peripheral wall are injection-molded and accordingly are kept from disengaging along the direction of the axis of rotation; and
in the method,
before the first injection molding step, the bushing is formed by pre-injection molding and placed into the first mold.

15. The method of claim 14, wherein in a pre-injection molding step, the bushing is formed from the thermoplastic crystalline polymer by injection molding.
